# EUROPEAN PATENT SPECIFICATION

(11) **EP 0 775 810 B1**
(45) Date of publication and mention of the grant of the patent: **06.06.2001**
(21) Application number: 95308413.4
(22) Date of filing: 23.11.1995
(51) Int. Cl.: F02B 23/06, F02F 7/00

(54) **A piston structure with a combustion chamber**
Kolben mit Brennkammer
Piston avec chambre de combustion

(43) Date of publication of application: 28.05.1997
(73) Proprietor: Isuzu Motors Limited, Tokyo 140-8524 (JP)
(72) Inventor: Matsuoka, Hiroshi, Yamato-shi, Kanagawa-ken 242 (JP); Kawamura, Hideo, Kouza-gun, Kanagawa-ken 253-01 (JP)
(74) Representative: Jenkins, Peter David

(56) References cited:
- EP-A- 0 675 273
- FR-A- 2 559 837
- GB-A- 265 412
- PATENT ABSTRACTS OF JAPAN vol. 12 no. 134 (M-689) [2981] ,23 April 1988 & JP-A-62 255560 (MAZDA) 7 November 1987,

## Description

The present invention relates to a piston structure having a combustion chamber structure in which a combustion chamber is formed almost at the center of the piston shaft.

The combustion temperature in a precombustion chamber is generally high and it is therefore effective in reducing NOx emissions to burn rich air-fuel mixture. Burning the rich mixture when the combustion temperature is high is effectively realized by the use of engines with a precombustion chamber. In the precombustion chamber-incorporated engines, to increase the combustion speed of the precombustion chamber almost to that of the direct injection type combustion chamber requires increasing the cross-sectional passage area of a communication hole connecting the precombustion chamber to the main combustion chamber. Increasing the cross-sectional area of the communication hole, however, lowers the ejection speed of the mixture flowing from the precombustion chamber into the main combustion chamber, resulting in a poor combustion in the main combustion chamber. Because the communication hole that connects the main combustion chamber and the precombustion chamber is located either at the central part of the cylinder or at one point of the cylinder periphery, the distance that the fuel mixture jet must travel is long, with the result that the fuel mixture and air in the main combustion chamber are not sufficiently mixed, producing HC emissions and smoke.

There has been an engine with a swirl chamber, developed to improve combustion. The engine with a swirl chamber includes a swirl chamber formed in the cylinder head or piston head, a communication hole communicating the swirl chamber to the main combustion chamber formed in the cylinder, and a fuel injection nozzle that sprays fuel into the swirl chamber. In this structure a swirl produced in the swirl chamber is mixed with a fuel injected into the chamber to form air-fuel mixture, which is subjected to a primary combustion. The flame and unburned mixture gas is ejected from the swirl chamber through the communication hole into the main combustion chamber where the mixture is subjected to second combustion (Japan Patent Laid-Open No. 112613/1990).

The engine with a swirl chamber has a problem that unless the direction of swirl formed in the swirl chamber, the direction of sprayed fuel from the fuel injection nozzle and the fuel injection timing from the fuel injection nozzle match, the amount of emissions such as NOx and smoke will increase. Because in the swirl chamber-incorporated engine the communication hole connecting the precombustion chamber and the main combustion chamber is small, there is a throttling loss caused by the communication hole which reduces the engine output. The communication hole connecting the main combustion chamber and the precombustion chamber is generally located at the central part or outer peripheral part of the cylinder, so that the distance that the jet of mixture must travel is long, resulting in poor mixing of the fuel mixture with air in the main combustion chamber. This in turn produces emissions such as HC and smoke, and also reduces combustion speed and mileage.

Where the engine is constructed to have a precombustion chamber, increasing the combustion speed of the precombustion chamber almost to that of the direct injection type combustion chamber requires enlarging the cross sectional area of the communication hole, which connects the precombustion chamber and the main combustion chamber. When the cross-sectional area of the communication hole is increased, however, the speed of ejection from the precombustion chamber to the main combustion chamber is reduced, resulting in an insufficient combustion in the main combustion chamber.

To deal with this problem, a possible measure may involve installing the precombustion chamber at the center of the cylinder and providing two or more communication holes to connect the main combustion chamber and the precombustion chamber, both on the cylinder side. This increases the overall cross-sectional area of the communication holes and therefore lowers the throttling loss caused by the communication holes without reducing the energy of ejection from the precombustion chamber through the communication holes into the main combustion chamber.

Forming the precombustion chamber almost at the center of the cylinder head, however, raises a problem of reducing the space where the intake and exhaust ports are formed. This may be solved by forming the precombustion chamber in the piston in the precombustion chamber-incorporated engine. Considering the thermal energy dissipation from the precombustion chamber formed in the piston, the precombustion chamber may be constructed in a heat insulating structure.

In the engine with a precombustion chamber, the air flow in the precombustion chamber is active and the heat transfer rate between the hot burning gas and the inner wall of the precombustion chamber is high. Because flame and unburned fuel mixture gas is ejected at high speed from the precombustion chamber through the communication holes into the main combustion chamber, the heat transfer rate between the wall surface of the communication holes and hot burning gas passing through them is high.

There has been developed a heat insulating engine, which reduces heat dissipation from the combustion chamber to improve thermal efficiency. The heat insulating piston has its piston head formed in a heat insulating structure-which includes a reduced area of contact through a low thermal conduction Material, and an air layer-thereby keeping the temperature of the wall surface of the piston head high and that of the piston skirt low for sliding. The heat-resistant members forming the piston head are made of a low thermal expansion ceramics such as Si₃N₄. Likewise, the material of the piston skirt uses a low thermal expansion metal such as low thermal expansion cast iron.

The heat insulating piston has a piston skirt mounted to the piston head. Although the metal of the piston skirt has a low thermal coefficient, the thermal expansion at high temperature is large when compared with that of the ceramics such as Si₃N₄ that forms the piston head. Therefore, not only is the mounting structure between the piston head and the piston skirt is complicated but, when a heat insulating air layer is formed between the piston head and the piston skirt, the gas seal structure for high temperature and high pressure gas at the outer circumference of the piston becomes complex, increasing the manufacture cost. When the heat insulation air layer is not formed between the piston head and the piston skirt, the insulation level deteriorates, increasing the heat flow from the piston head to the piston skirt. This in turn increases heat dissipation from the combustion chamber, resulting in a degraded performance of the engine.

The ceramic piston disclosed in Japan Utility Model Laid-Open No. 93141/1987 is characterized in that the outer periphery of a ceramic crown with a cavity is fitted in the head portion of a cylindrical aluminum skirt, that the a plastic fluid material is installed in a gap between the outer periphery of the ceramic crown and the head portion, that the plastic fluid material is heated and pressurized to be deformed, joining the ceramic crown and the aluminum skit together, and that a cast iron ring is installed, together with the plastic fluid material, in the gap between the combustion chamber outer periphery and the head portion.

The engine with a precombustion chamber disclosed in Japan Patent Laid-Open No. 241049/1994 has a precombustion chamber formed in the piston head, a main combustion chamber formed in the cylinder, communication holes connecting the main combustion chamber and the precombustion chamber, and a fuel injection nozzle that injects fuel into the precombustion chamber. As the piston nears the top dead center, the fuel injection nozzle protrudes into the nozzle insertion hole formed in the piston head. The communication holes are formed inclined with respect to the cylinder axis in the circumferential direction so that the direction of inflow into the precombustion chamber is reverse to the direction of swirl in the main combustion chamber and that the direction of ejection from the precombustion chamber to the main combustion chamber is in the same direction as the swirl in the main combustion chamber.

Japan Patent Laid-Open No. 149725/1990 discloses a direct injection type alcohol engine. In this alcohol engine, an injector injects alcohol fuel into a combustion chamber comprising a recessed portion formed in the top of the piston. The top clearance when the piston is at the top dead center is set to 2-5 mm. The combustion chamber is formed with a lip at the opening edge, and the circumferential wall almost perpendicular to the direction in which the fuel is sprayed from the injector is formed along the circumferential direction in the combustion chamber.

Japan Utility Model Laid-Open No. 100528/1985 discloses a piston for direct injection type diesel engines. This piston is characterized in that the opening portion of the combustion chamber formed in the piston top portion is provided with a closing member, that fuel injection passages communicating the combustion chamber and the cylinder chamber are formed in the closing member in such a way that they are oriented in the direction that produces a swirl in the combustion chamber and extend almost parallel to the direction in which the fuel is ejected from the fuel injection nozzle. This piston uses a heat-resistant material in the top portion of the combustion chamber subjected to severe thermal load to secure a sufficient durability, but it does not employ a heat insulating structure for the precombustion chamber.

Japan Utility Model Laid-Open No. 141446/1985 discloses a ceramics-incorporated piston. The ceramics-incorporated piston has an assembly which consists of a ceramic member and a heat- and corrosion-resistant metal ring joined to the outer periphery of the ceramic member. The assembly is threaded into the piston body of aluminum alloy to install the ceramic member in the recess of the piston body on the combustion chamber side. The combustion chamber is therefore formed of a ceramic member, which is threaded into the piston body of aluminum alloy.

Japan Patent Laid-Open No. 109267/1988 discloses a piston for internal combustion engines. This piston has a piston body and a ceramic cavity member installed in the top part of the piston body by casting. That is, the piston body is cast around the cavity member, with a heat insulating layer-which is a molded ceramic fiber attached with an inorganic material-covering the outer surface of the cavity member. The heat insulating layer of ceramic fiber is provided around the combustion chamber to prevent ingress of molten metal of the piston body into the combustion chamber and to secure the strength of the combustion chamber. The piston, however, does not provide a structure for joining the heat-resistant metal and the heat insulating layer.

In the piston with a combustion chamber, it is preferred that, when a combustion chamber structure that forms the combustion chamber is installed in the cavity formed in the piston body, the combustion chamber structure be made of a heat-resistant, high temperature high strength material if the piston body is made of aluminum alloy or cast iron. In that case, one problem that should be addressed is that the combustion chamber structure should be firmly secured to the piston body while minimizing the dissipation of heat energy from the combustion chamber formed in the combustion chamber structure.

EPA-A-0675273 discloses a piston made of a metal material and provided with a cavity formed at the center of the head portion thereof. A combustion chamber structure is installed in the cavity. The structure comprises heat resisting material that has a high strength. The structure includes a chamber formed at the center of the piston head portion, a central nozzle insertion hole in the vicinity of the upper dead centre of the piston and communication ports arranged around the nozzle insertion hole. Circumferentially spaced clearances are formed between the circumference of the cavity and the combustion chamber structure. A ring is provided in an annular groove defined between the chamber structure and the cavity to fix the combustion chamber structure inside the cavity. The ring is formed out of a material identical with that out of which the piston head is formed.

An aim of this invention is to solve the above-mentioned problems, that is, to provide a piston structure with a combustion chamber, in which a combustion chamber is formed in the piston to simplify the cylinder head structure and allows the intake and exhaust ports to be formed large or make it possible to form two or more sets of these ports; in which the piston body is formed with a cavity where a combustion chamber structure having a combustion chamber therein is installed with a heat insulating air layer interposed therebetween and a mounting ring is made of almost the same kind of material as the piston body to absorb a thermal expansion difference so that it can be firmly installed without play in the piston body; and in which the heat dissipation from the combustion chamber to the piston body is minimized and the combustion chamber structure is made easy to assemble and is formed in a low heat capacity structure.

The present invention accordingly provides a
piston structure with a combustion chamber, comprising: a piston body made of a metal material and having a cavity formed at the center of a piston head portion;
a combustion chamber structure made of a heat-resistant, high-temperature high-strength material installed in the cavity, the combustion chamber structure including a combustion chamber formed almost at the center of the piston head portion, a nozzle insertion hole formed almost at the center of the combustion chamber, and communication holes spaced from each other and arranged around the nozzle insertion hole;
heat insulating air layers formed between a wall surface of the cavity in the piston body
and the combustion chamber structure; and
a mounting ring made of almost the same kind of material as that of the piston body and joined with the piston body, the mounting ring engaging the outer circumference of the combustion chamber structure installed in the cavity to fix the combustion chamber structure inside the cavity, characterized in that the piston structure with the combustion chamber further comprises thermal expansion control members installed between a top surface of a projecting portion provided at a lower outer periphery of the combustion chamber structure and a lower end surface of the mounting ring for improving robustness by adjusting thermal expansion between the combustion chamber structure, the piston body and the mounting ring, and in that the thermal expansion control members have a thermal expansion coefficient larger than that of the combustion chamber structure.

The piston structure with a combustion chamber according to a first embodiment of the invention provides that if there is a thermal expansion difference between the piston body and the combustion chamber structure, the mounting ring, as it is thermally expanded, absorbs the thermal expansion difference between the combustion chamber structure and the piston body, thereby pressing the combustion chamber structure against the cavity wall surface of the piston body to firmly fix them together without play. Because the combustion chamber is located almost at the center of the piston, the distance the mixture jet from the communication holes must travel is short, reducing the burning time and improving combustion efficiency. The fact that the travel distance of the mixture jet from the combustion chamber is short allows the passage area of the communication holes to be formed large, reducing the throttling loss and improving the efficiency.

Because a thermal expansion control member is installed between the top surface of the projecting portion provided to the lower outer circumferential part of the combustion chamber structure and the lower end surface of the mounting ring, it is possible to adjust the thermal expansion among the combustion chamber structure, the piston body and the mounting ring and thereby make the mounting structure between them very robust. Further, because the mounting ring and the thermal expansion control member combine to adjust the thermal expansion difference between the piston body and the combustion chamber structure and thereby eliminates play, firm and stable connection between them is assured. It is therefore possible to use ceramics such as Si₃N₄ with small thermal expansion coefficient in forming the combustion chamber structure. The combustion chamber structure can thus be made highly resistant to heat and have a robust combustion chamber.

Further, because the heat insulating air layer is formed between the piston body and the combustion chamber structure, it is possible to reduce the heat capacity of the combustion chamber structure and improve the capability to follow the gas temperature. At the same time, the heat insulating air layer greatly enhances the heat insulating performance of the combustion chamber, minimizing release of thermal energy from the combustion chamber and improving fuel efficiency.

A gap may be formed between the inner circumferential surface of the mounting ring and the outer circumferential surface of the combustion chamber structure. Further, if the heat insulating air layer between the combustion chamber structure and the piston body is hermetically enclosed by a seal gasket, the heat insulation performance of the combustion chamber can be enhanced.

Preferably, the upper outer circumferential surface of the mounting ring and the cavity wall surface of the piston body are fused together, and a gap is formed between the lower outer circumferential surface of the mounting ring and the cavity wall surface of the piston body.

Preferably, a sealing gasket is interposed between an undercut portion formed on the inner circumferential surface of the mounting ring and a stepped portion formed on the outer circumferential surface of the combustion chamber structure. The mounting ring forms the whole of the piston top portion, with the bottom surface of the mounting ring and the top surface of the piston body joined together.

The piston head portion is formed at its center with the nozzle insertion hole through which the fuel injection nozzle can enter as the piston nears the top dead center. The piston head portion is also formed with two or more communication holes-connecting the main combustion chamber and the combustion chamber-around the nozzle insertion hole preferably in such a way that they are inclined with respect to cylinder axis and arranged spaced from each other in the circumferential direction of the nozzle insertion hole. In this construction, the combustion chamber is located at the center of the piston and the distance that the fuel jet from the communication holes must travel is short. This in turn reduces the burning period promoting the mixing of the fuel mixture with fresh air present in the periphery of the cylinder, improving the performance. If the communication holes are inclined outwardly, the travel distance of the jet from the combustion chamber will be further reduced, accelerating the mixing with fresh air in the cylinder periphery.

Because the distance that the fuel jet must travel from the precombustion chamber to the main combustion chamber is short, the passage area of the communication holes as a whole can be made large to reduce the throttling loss and improve efficiency. The piston structure with a precombustion chamber, therefore, can produce and burn rich fuel mixture in the precombustion chamber and at the same time ensure the burning speed equivalent to that of the direct injection type combustion chamber. This in turn minimizes the NOx emissions, promotes mixing of fuel with air in the main combustion chamber and, because of the increased burning speed, shortens the burning period. This piston structure therefore assures combustion with reduced emissions of NOx, HC and smoke.

The heat-resistant alloy for the combustion chamber structure is preferably a material with low thermal expansion coefficient and high heat resistance, such as Incoloy 903. The piston top portion is made of Incoloy 903 or Si₃N₄ with low thermal expansion and excellent heat resistance, and the piston top portion and the combustion chamber structure are joined together by metal flow.

The piston top portion is formed with the communication holes and thus subjected to hot gas to become a high temperature area. Hence, the piston top portion is made from a heat-resistant alloy such as Incoloy 903 or a heat-resistant ceramics such as Si₃N₄ with low thermal expansion coefficient. The circumferential wall portion and the bottom wall portion of the combustion chamber structure may be made of a heat-resistant alloy having a thermal expansion coefficient intermediate between those of the piston top portion and the piston body, and the circumferential wall portion and the piston body are joined by metal flow. Alternatively, the piston top portion may be formed separate from the circumferential wall portion, and these two members be joined together by plastic deformation of metal, i.e., metal flow, or by beam welding.

The combustion chamber structure having the circumferential wall portion and the bottom wall may be made of a composite material, which is a porous body of Niresist and AlN filled with Al alloy, or of a Ti-Si-C fiber-reinforced ceramics. The piston top portion is formed of Incoloy 903 or Si₃N₄.

The combustion chamber structure may be installed in the piston body by casting.

By installing the combustion chamber structure in the piston body by casting, it is possible to bring the combustion chamber structure and the piston body into firm engagement with each other at their boundary. This close contact of these members offers a good seal at the their boundary and therefore obviates the need for installing a seal member between them, simplifying the structure.

Further, because of a rapid air movement as well as a large heat conduction and a high gas temperature in the combustion chamber, a large amount of heat is released. Hence, by constructing the combustion chamber in a heat insulating structure, it is possible to prevent heat dissipation and significantly improve thermal efficiency. In this case, the heat insulating material selected is preferably such as will not be burned or peeled off by casting molten metal.

When a piston head portion is fixed in a piston skirt portion by casting, the outer circumferential portion of the piston head portion is slightly deflected upward during casting. When the molten metal of the piston skirt portion solidifies, it contracts applying the axial contracting force to the piston head portion. Thus, the lower outer circumferential surface of the piston head portion and the upper outer circumferential surface of the piston skirt portion are placed in firm contact, providing a good seal at the outer circumferential boundary between them.

A heat insulating layer may be formed between the lower surface of the piston head portion and the upper surface of the piston skirt portion which greatly enhances the heat insulating performance of the combustion chamber. The heat insulating layer is formed by installing during the process of casting a combustible material between the lower surface of the piston head portion and the upper surface of the piston skirt portion. The combustible material is burned when the engine is operated, to form a sealed space where the combustible material was. The space thus formed constitutes the heat insulating layer. In this case, the combustible material should preferably be the one that is not burned by the casting molten metal but by engine operation. A gasket may also be interposed between the lower outer circumferential surface of the piston head portion and the upper outer circumferential surface of the piston skirt portion so that the gasket is subjected to a compression stress as the piston skirt portion contracts during casting.

In such a piston structure with a combustion chamber, the mounting portion of the piston head portion is fitted into the mounting hole of the piston skirt portion, and a metal joining member is installed plastically deformed between and extending into the mounting portion and the mounting hole to fix the piston head portion to the piston skirt portion. If the piston head portion is secured to the piston skirt portion made of metal by plastic deformation of a metal, i.e., metal flow, the outer circumferential portion of the piston head portion, which is made thin by the tapered surface, is slightly deflected upwardly during the metal flow, with the result that an axial vector of force generated by the tapered surface of the piston skirt portion is applied to the piston head portion. Hence, the lower outer circumferential surface of the piston head portion and the upper outer circumferential surface of the piston skirt portion are brought into hermetical contact, sealing the two members at the outer circumferential boundary in good condition, eliminating the need for installing a sealing member between them, simplifying the structure.

Alternatively, a gasket may be installed between the lower surface of the piston head portion and the upper surface of the piston skirt portion. The gasket is applied a compression stress when the piston head portion and the piston skirt portion are secured together by plastic deformation of the joining member. The gasket is mounted to the piston head portion near the mounting hole.

Because there is a heat insulating layer at the boundary between the piston head portion and the piston skirt portion, the combustion chamber has a substantially enhanced heat insulating performance, thus preventing heat dissipation from the combustion chamber to the piston skirt portion and improving the fuel efficiency. Particularly because of a rapid air flow as well as a large heat conduction and a high gas temperature in the combustion chamber, a large amount of heat is released. Hence, by constructing the combustion chamber in a heat insulating structure, it is possible to prevent heat dissipation and significantly improve thermal efficiency.

When the heat insulating air layer is formed around the piston outer circumference between the piston head portion and the piston skirt portion without providing a sealing gasket between them, the heat insulation level obtained is almost equal to that obtained with a structure that has a sealing gasket between the two members to offer perfect gas sealing. That is, even when the heat insulating air layer is not isolated from the combustion chamber by the sealing gasket, because the lower outer circumferential surface of the piston head portion and the upper outer circumferential surface of the piston skirt portion are in contact with each other, a thermal throttle is provided slowing the gas flow. As a result, the heat transfer coefficient between the two members becomes low, reducing the amount of heat transferred from the piston head portion to the piston skirt portion through the heat insulating air layer. The heat transfer coefficient is nearly proportional to the gas flow rate to the 0.8th power.

The mounting portion is a mounting shaft portion that projects from the circumferential wall portion or bottom wall portion that defines the combustion chamber. The joining member comprises a joining ring extending over the entire circumference or two or more joining pieces partly extending in the circumferential direction.

The piston head portion is formed with a nozzle insertion hole almost at the center through which the fuel injection nozzle projects into the combustion chamber, and with communication holes that are arranged, spaced from each other, in the circumferential direction of the nozzle insertion hole to communicate the combustion chamber to the main combustion chamber formed in the cylinder. The piston head portion can comprise a plate of heat-resistant ceramics formed with the nozzle insertion hole and the communication holes, and a piston head body of heat-resistant metal to which the plate is secured by plastic deformation of a metal.

Further, because the period during which the fuel injection nozzle stays in the combustion chamber, i.e., the closed period during which the nozzle insertion hole is closed by the incoming fuel injection nozzle is determined by the length of projection of the fuel injection nozzle from the lower surface of the cylinder head and the thickness of the nozzle insertion hole portion, the closed period can be controlled by appropriately selecting the projection length of the fuel injection nozzle and the thickness of the nozzle insertion hole portion.

Preferred embodiment of the present invention will now be described hereinbelow by way of example only with reference to the accompanying drawings, in which:-
Figure 1 is a cross section of a piston structure with a combustion chamber as one embodiment of this invention; and
Figure 2 is a plan view of the piston of Figure 1.

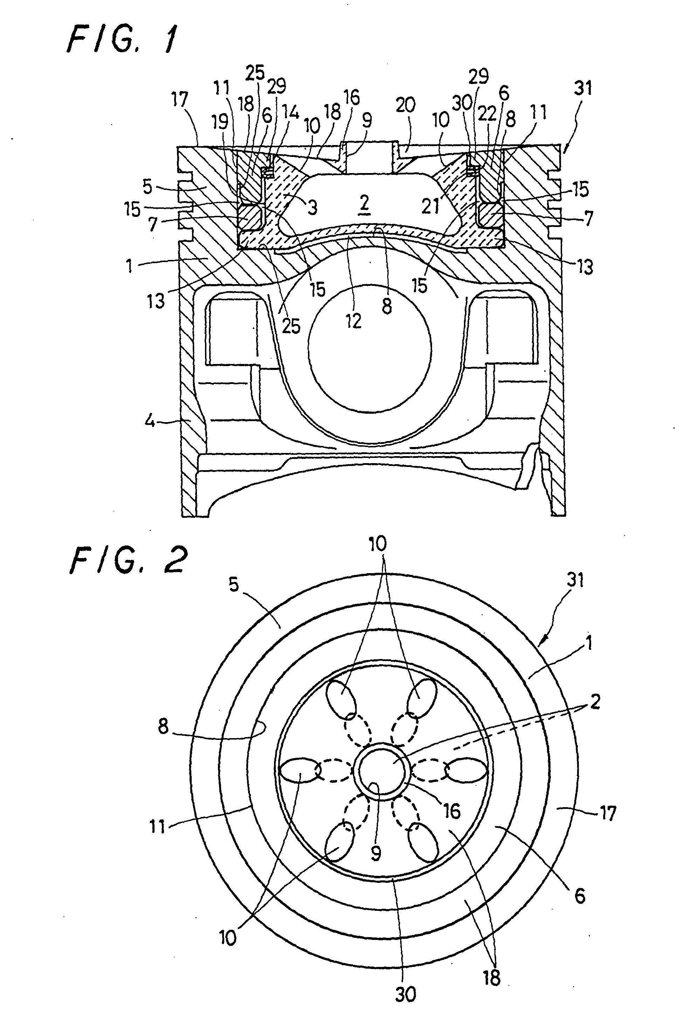

By referring to the accompanying drawings, embodiments of the piston structure with a combustion chamber according to this invention are described. In Figures 1, and 2, components that are identical are given like reference numerals and their repetitive descriptions are omitted.

An engine with a precombustion chamber, which incorporates the piston structure having a combustion chamber of this invention, comprises, though not shown, a cylinder block made of a metal material such as cast iron and aluminum alloy in which cylinders are formed, and a cylinder head made of such a metal material as aluminum alloy that is secured to the cylinder block through a gasket. The cylinder block is provided with bores the number of which corresponds to that of engine cylinders. The bores may be fitted with cylinder liners that form the cylinders. The cylinder head is formed with the number of intake and exhaust ports that corresponds to the number of engine cylinders. Intake and exhaust valves are installed at the intake and exhaust ports. In the cylinders formed in the cylinder block pistons are installed so that they can reciprocate. A main combustion chamber 20 is a cylinder chamber formed on the cylinder side between the underside of the cylinder head and the top surface 17 of the piston and, in Figure 1, also includes a recess formed by a tapered surface 18 on the top surface 17.

The engine with a precombustion chamber, which has a combustion chamber-incorporated piston structure, is a diesel engine that injects a liquid fuel from a fuel injection nozzle (which corresponds to a reference numeral 40 that appears later) into a precombustion chamber, the combustion chamber 2, for burning. This engine is characterized in the structure of a piston 31 that reciprocates in the cylinder. This piston structure comprises a piston body 1 having a piston head portion 5 and a piston skirt portion 4, a combustion chamber structure 3 installed in a cavity 8 formed in the piston body 1 with heat insulating air layers 12, 15 in between, and a mounting ring 6 made of the same kind of material as the piston body 1 to fix the combustion chamber structure 3 to the piston body 1.

This embodiment comprises, in particular: a piston body 1 made of a metal material having a cavity 8 formed around the center axis of the piston 31 as a center; a combustion chamber structure 3 made of a heat-resistant high-temperature, high-strength material, which is installed in the cavity 8 with the heat insulating air layer 12 interposed therebetween and which has formed almost at the center of the piston a combustion chamber 2 having a nozzle insertion hole 9 and communication holes 10 spaced from each other and formed around the nozzle insertion hole 9; and a mounting ring 6 made of almost the same kind of material as the piston body 1, placed in contact with the piston body 1, and installed in the cavity 8 and around the outer periphery of the combustion chamber structure 3 to fix the combustion chamber structure 3 in the cavity 8. Although the mounting ring 6 is not limited to a high thermal expansion material, it is basically preferred that the mounting ring 6 be made from the same kind of material as the piston body 1, considering the weldability. If a brazing material is used for welding the mounting ring 6 to the piston body 1, however, the mounting ring 6 need not be formed of exactly the same material as the piston body 1. This is the reason that the mounting ring 6 is made of almost the same kind of material as the piston body 1.

Between the top surface of a projection 13 formed at the lower periphery of the combustion chamber structure 3 and the bottom surface of the mounting ring 6 is installed a thermal expansion control member 7 made of a high linear expansion material, i.e., a high thermal expansion material. The nozzle insertion hole 9 is located almost at the center of the piston and the fuel injection nozzle provided to the cylinder head enters into the combustion chamber 2 through the nozzle insertion hole 9 when the piston nears the top dead center. The wall of the nozzle insertion hole 9 forms a guide cylinder 16, whose length adjusts the period during which the fuel injection nozzle protrudes into the combustion chamber 2. The required expansion coefficient of the thermal expansion control member 7 is determined by the thermal expansion coefficient of the combustion chamber structure 3 that forms the combustion chamber 2. Because the thermal expansion coefficient of the combustion chamber structure 3 varies greatly depending on whether it is made from Si₃N₄ or a heat-resistant metal such as Incoloy 903, the thermal expansion coefficient of the thermal expansion control member 7 also changes.

That is, when the combustion chamber structure 3 is formed of, for example, Si₃N₄, the thermal expansion control member 7 needs to be made of a material with large thermal expansion coefficient. Whereas, when the combustion chamber structure 3 is made of other material than Si₃N₄, the thermal expansion control member 7 should be formed of a different material. In more concrete terms, if the combustion chamber structure 3 is made of Si₃N₄, the thermal expansion control member 7 is formed of a material with large thermal expansion coefficient such as magnesium alloy. If the combustion chamber structure 3 is made of a heat-resistant metal, the thermal expansion control member 7 is formed of a material with relatively large thermal expansion coefficient such as aluminum alloy and stainless steel material.

The piston body 1 is made of a metal such as aluminum alloy (AC8A, LO-EX), whose thermal expansion coefficient is 20-21×10⁻⁶/°C. The mounting ring 6 is constructed of the same kind of metal as the piston body 1, such as aluminum alloy (A5052), that allows its welding to the piston body 1 by beam welding or laser welding. The piston body's thermal expansion coefficient in this case is 23×10⁻⁶/°C. The combustion chamber structure 3 is formed of either a heat-resistant metal such as Incoloy or a heat-resistant, high-temperature high-strength material such as a heat-resistant ceramics Si₃N₄. When it is made of Si₃N₄, its thermal expansion coefficient is 3.2×10⁻⁶/°C. The thermal expansion control member 7 is formed of a magnesium alloy and its thermal expansion coefficient is 26×10⁻⁶/°C.

In the piston structure with this combustion chamber, there is formed a gap 30 between the inner circumferential surface of the mounting ring 6 and the upper outer circumferential surface 19 of the combustion chamber structure 3. The upper outer circumferential surface of the mounting ring 6 and a cavity wall surface 25 of the piston body 1 are welded together by beam welding or laser welding to form a joint 11 at a part of their boundary surface. There is a heat insulating air layer 15 or a gap between the lower outer circumferential surface of the mounting ring 6 and the cavity wall surface 25 of the piston body 1. In other words, the upper portion of the mounting ring 6 on the piston top surface 17 side is welded to the piston body 1, while the lower portion of the mounting ring 6 has a gap, i.e., the heat insulating air layer 15 between it and the piston body 1. Further, the upper inner circumferential surface of the mounting ring 6 is provided with an inwardly protruding locking portion 29, whose underside or undercut portion 22 engages, through a sealing gasket 14, with a step portion 21 formed in the upper outer circumferential surface of the combustion chamber structure 3. That is, the sealing gasket 14 is interposed between the undercut portion 22 formed on the inner circumferential surface of the mounting ring 6 and the step portion 21 formed on the outer circumferential surface 19 of the combustion chamber structure 3; and the heat insulating air layer 15 of an enclosed space is formed between the inner circumferential surface of the mounting ring 6 and the outer circumferential surface 19 of the combustion chamber structure 3. In this embodiment, the gap 30 between the mounting ring 6 and the combustion chamber structure 3 can allow for a thermal expansion difference between the piston body 1 and the combustion chamber structure 3. The thermal expansion difference can be elastically absorbed by the sealing gasket 14.

The combustion chamber structure 3 has a precombustion chamber, i.e., a combustion chamber 2 located almost at the center of the cylinder or piston, the nozzle insertion hole 9 located at the center of the combustion chamber 2, and a number of communication holes 10 (in Figure 2, six) arranged around the nozzle insertion hole 9 and spaced apart from each other. The communication holes 10 are formed inclined toward the cylinder periphery and arranged along the circumference of the nozzle insertion hole 9. The cylinder head has secured thereto a fuel injection nozzle with multiple spray holes which is arranged at the center of the cylinder axis. The spray portion of the fuel injection nozzle projects from the underside of the cylinder head. As the piston nears the top dead center, the injection holes of the fuel injection nozzle secured to the cylinder head go into the nozzle insertion hole 9, spraying the fuel from the injection holes into the combustion chamber 2. The cylinder head may be provided with a glow plug as an auxiliary device for starting and the piston head portion 5 formed with a plug hole so that the glow plug goes into the combustion chamber 2 when the piston nears the top dead center.

In this embodiment, a number of communication holes 10 are formed around the nozzle insertion hole 9 to make the passage area of the communication holes 10 distributed along the entire circumference covering a wide area so that the flame and the air-fuel mixture ejected out of the communication holes 10 can mix well with air in the main combustion chamber 20. That is, the communication holes 10 connecting the combustion chamber 2 to the main combustion chamber 20 can be made large in its total passage area so that a throttling loss can be reduced, eliminating a fall in the output. Because the combustion chamber 2 is arranged concentric with the center axis of the cylinder and the communication holes 10 are formed at the outer circumferential surface of the combustion chamber 2, even if the increased passage area of the communication holes 10 reduces the ejection energy and the distance the jet flow out of the combustion chamber 2 travels is reduced, the jet flow can mix well with the air in the main combustion chamber 20 in a short period of time. This reduces the burning period in the main combustion chamber 20 and limits the production of HC and smoke.

Although the previous embodiments concern the structure in which the combustion chamber is formed at almost the center of the piston body 1, the fixing of the combustion chamber structure to the piston body can be achieved by other constructions. Among them, though not shown, are constructions in which the combustion chamber is formed off-center in the piston body, in which the opening of the combustion chamber is tapered off toward the end, or in which the combustion chamber is formed with a throat.

## Claims

1. A piston structure with a combustion chamber, comprising:
a piston body (1) made of a metal material and having a cavity (8) formed at the center of a piston head portion (5);
a combustion chamber structure (3) made of a heat-resistant, high-temperature high-strength material installed in the cavity (8), the combustion chamber structure (3) including a combustion chamber (2) formed almost at the center of the piston head portion (5), a nozzle insertion hole (9) formed almost at the center of the combustion chamber (2), and communication holes (10) spaced from each other and arranged around the nozzle insertion hole (9);
heat insulating air layers (12, 15) formed between a wall surface (25) of the cavity (8) in the piston body (1) and the combustion chamber structure (3); and
a mounting ring (6) made of almost the same kind of material as that of the piston body (1) and joined with the piston body (1), the mounting ring (6) engaging the outer circumference of the combustion chamber structure (3) installed in the cavity (8) to fix the combustion chamber structure (3) inside the cavity (8),
characterized in that the piston structure with the combustion chamber further comprises thermal expansion control members (7) installed between a top surface of a projecting portion (13) provided at a lower outer periphery of the combustion chamber structure (3) and a lower end surface of the mounting ring (6) for improving robustness by adjusting thermal expansion between the combustion chamber structure (3), the piston body (1) and the mounting ring (6), and in that the thermal expansion control members (7) have a thermal expansion coefficient larger than that of the combustion chamber structure (3).

2. A piston structure with a combustion chamber, according to claim 1, wherein a gap (30) is formed between an inner circumferential surface of the mounting ring (6) and an outer circumferential surface of the combustion chamber structure (3).

3. A piston structure with a combustion chamber, according to claim 1, wherein an upper outer circumferential surface of the mounting right (6) and the cavity wall surface (25) of the piston body (1) are fused together (11), and the heat insulating air layers (15) are formed between a lower outer circumferential surface of the mounting ring (6) and the cavity wall surface (25) of the piston body (1) .

4. A piston structure with a combustion chamber, according to claim 1, wherein gaskets (14) for sealing are interposed between undercut portions (22) formed on the inner circumferential surface of the mounting ring (6) and stepped portions (21) formed on the outer circumferential surface (19) of the combustion chamber structure (3).

## Patentansprüche

1. Kolbenanordnung mit einer Brennkammer und folgenden Merkmalen:
einem Kolbenkörper (1) aus einem metallischen Material, der eine Aussparung (8) aufweist, die in der Mitte eines Kolbenkopfabschnitts (5) gebildet ist;
einer Brennkammeranordnung (3) aus einem wärmebeständigen, hochfesten Hochtemperaturmaterial, die in der Ausnehmung (8) angeordnet ist, wobei die Brennkammeranordnung (3) aufweist: eine Brennkammer (2), die annäherungsweise in der Mitte des Kolbenkopfabschnitts (5) ausgebildet ist, eine Düseneinführöffnung (3), die annäherungsweise in der Mitte der Brennkammer (2) ausgebildet ist, und Verbindungsöffnungen (10), die voneinander beabstandet und um die Düseneinführöffnung (9) angeordnet sind;
wärmeisolierenden Luftschichten (12, 15), die zwischen einer Wandoberfläche (25) der Ausnehmung (8) in dem Kolbenkörper (1) und der Brennkammeranordnung (3) ausgebildet sind; und
einem Befestigungsring (6), der aus annäherungsweise derselben Art von Material wie der Kolbenkörper (1) besteht und der mit dem Kolbenkörper (1) verbunden ist, wobei der Befestigungsring an dem äußeren Umfang der in der Ausnehmung (8) angeordneten Brennkammeranordnung (3) angreift, um die Brennkammeranordnung (3) in der Ausnehmung (8) zu befestigen, dadurch gekennzeichnet,
dass die Brennkammeranordnung mit der Brennkammer weiterhin ein Element (7) zur Beeinflussung der thermischen Ausdehnung aufweist, das zwischen einer oberen Oberfläche eines an einem unteren äußeren Rand der Brennkammeranordnung (3) ausgebildeten hervorstehenden Abschnitts (13) und einer Oberfläche am unteren Ende des Befestigungsrings (6) angeordnet ist, um die Robustheit durch Einstellen der thermischen Ausdehnung zwischen der Brennkammeranordnung (3), dem Kolbenkörper (1) und dem Befestigungsring (6) zu verbessern, und dass das Element (7) zur Beeinflussung der thermischen Ausdehnung einen thermischen Ausdehnungskoeffizienten aufweist, der größer als der der Brennkammeranordnung (3) ist.

2. Brennkammeranordnung mit einer Brennkammer nach Anspruch 1, bei der ein Spalt (30) zwischen einer inneren Umfangsoberfläche des Befestigungsrings (6) und einer äußeren Umfangsoberfläche der Brennkammeranordnung (3) ausgebildet ist.

3. Brennkammeranordnung mit einer Brennkammer nach Anspruch 1, bei der eine obere äußere Umfangsoberfläche des Befestigungsrings (6) und die Wandoberfläche (25) der Ausnehmung des Kolbenkörpers (1) miteinander verbunden sind (11), und bei der die wärmeisolierenden Luftschichten (15) zwischen einer unteren äußeren Umfangsoberfläche des Befestigungsrings (6) und der Wandoberfläche (25) der Ausnehmung des Kolbenkörpers (1) ausgebildet sind.

4. Kolbenstruktur mit einer Brennkammer nach Anspruch 1, bei der Dichtungen (14) zum Abdichten zwischen unterschnittene Abschnitte (22), die an der inneren Umfangsoberfläche des Befestigungsrings (6) ausgebildet sind, und stufenförmige Abschnitte (21), die an der äußeren Umfangsoberfläche (19) der Brennkammeranordnung (3) ausgebildet sind, eingelegt sind.

## Revendications

1. Structure de piston avec une chambre de combustion, comprenant :
un corps de piston (1) constitué d'un matériau de métal et comportant une cavité (8) formée au centre d'une partie formant tête de piston (5) ;
une structure de chambre de combustion (3) constituée d'un matériau à haute résistance, résistant aux températures élevées, résistant à la chaleur, installée dans la cavité (8), la structure de chambre de combustion (3) comprenant une chambre de combustion (2) formée pratiquement au centre de la partie formant tête de piston (5), un orifice d'insertion de gicleur (9) formé pratiquement au centre de la chambre de combustion (2), et des orifices de communication (10) espacés les uns des autres et disposés autour de l'orifice d'insertion de gicleur (9) ;
des couches d'air d'isolation thermique (12, 15) formées entre une surface de paroi (25) de la cavité (8) dans le corps de piston (1) et la structure de chambre de combustion (3) ; et
un anneau de montage (6) constitué de pratiquement le même type de matériau que celui du corps de piston (1) et raccordé au corps de piston (1), l'anneau de montage (6) engageant la circonférence externe de la structure de chambre de combustion (3) installée dans la cavité (8) pour fixer la structure de chambre de combustion (3) à l'intérieur de la cavité (8),
caractérisée en ce que la structure de piston avec la chambre de combustion comprend également des éléments de contrôle de dilatation thermique (7) installés entre une surface supérieure d'une partie en saillie (13) située à une périphérie externe inférieure de la structure de chambre de combustion (3) et une surface d'extrémité inférieure de l'anneau de montage (6) pour améliorer la robustesse en ajustant la dilatation thermique entre la structure de chambre de combustion (3), le corps de piston (1) et l'anneau de montage (6), et en ce que les éléments de contrôle de dilatation thermique (7) ont un coefficient de dilatation thermique supérieur à celui de la structure de chambre de combustion (3).

2. Structure de piston avec une chambre de combustion selon la revendication 1, dans laquelle un espace (30) est formé entre une surface circonférentielle interne de l'anneau de montage (6) et une surface circonférentielle externe de la structure de chambre de combustion (3).

3. Structure de piston avec une chambre de combustion selon la revendication 1, dans laquelle une surface circonférentielle externe supérieure de l'anneau de montage (6) et la surface de paroi de cavité (25) du corps de piston (1) fusionnent l'une avec l'autre (11), et les couches d'air d'isolation thermique (15) sont formées entre une surface circonférentielle externe inférieure de l'anneau de montage (6) et la surface de paroi de cavité (25) du corps de piston (1).

4. Structure de piston avec une chambre de combustion selon la revendication 1, dans laquelle des joints d'étanchéité (14) sont intercalés entre des parties évidées par-dessous (22) formées sur la surface circonférentielle interne de l'anneau de montage (6) et des parties étagées (21) formées sur la surface circonférentielle externe (19) de la structure de chambre de combustion (3).
